Europäisches Patentamt

European Patent Office

Office européen des brevets

(11) Publication number: **0 083 330**
**B1**

# (12) EUROPEAN PATENT SPECIFICATION

(45) Date of publication of patent specification: 03.06.87

(51) Int. Cl.⁴: **H 01 M 10/12,** H 01 M 2/24, H 01 M 10/16

(21) Application number: 82850265.8

(22) Date of filing: 22.12.82

(54) **Lead acid accumulator with bottom connection.**

(30) Priority: 28.12.81 SE 8107784

(43) Date of publication of application:
06.07.83 Bulletin 83/27

(45) Publication of the grant of the patent:
03.06.87 Bulletin 87/23

(84) Designated Contracting States:
AT BE CH DE FR GB IT LI NL SE

(56) References cited:
DE-A-2 326 014
FR-A-1 392 265
US-A-1 506 403
US-A-2 180 959

(73) Proprietor: Tudor Aktiebolag
S-440 41 Nol (SE)

(72) Inventor: Schmechtig, Rune
Myrvägen 18
S-440 41 No1 (SE)
Inventor: Quist, Kaj
Oljobergsvägen 1
S-440 41 No1 (SE)

(74) Representative: Delhage, Einar et al
Bergenstrahle & Lindvall AB Sankt Paulsgatan 1
S-116 47 Stockholm (SE)

Courier Press, Leamington Spa, England.

## Description

The present invention relates to a lead acid accumulator with bottom connection, comprising at least one pair of accumulator cells, each cell being enclosed in a cell vessel which is common to said pair of cells and has a liquid-tight partition wall between the separate cells and a cover with bores for the pole posts, each of said cells containing two groups of electrode plates, one positive and one negative which are connected to corresponding connection straps, one of which is situated above and the other below the electrode plates, the bottom connection strap being common to said pair of cells and passing from one cell to the other through the partition wall.

Lead acid accumulators with bottom connections of the kind described above are previously known, e.g. through FR—PS 859 040. This arrangement offers the advantage that each cell is provided with only one upwardly extending pole post which is passed through the cover. Moreover, the electrical connection between the cells is located at the bottom, below the electrode plates in such a way that the bottom connection strap will be common to the pair of cells and is consequently positive in one cell and negative in the other. Since soldered connections as well as screw connections may be avoided with such a bottom connection, the transition resistance between the cells will be negligible. This is of particular importance in accumulators such as are used in submarines and where the cell height is large relative to the bottom area. Since the electrode plates in such batteries are also relatively high, the conductive resistance will be relatively high if the batteries are designed in a conventional manner, i.e. that the cell connection is located at the top of the battery. The arrangement with the bottom connection will consequently eliminate the need for the second pole post in the cover which means that the battery will also be much lighter compared to one of conventional design.

The current distribution in a battery with bottom connection will also be more uniform during charging and discharging sequences, compared to an accumulator of conventional design. The more uniform current distribution will also permit more rapid charging and longer life of the electrode plates.

The object of the present invention is to improve the mechanical properties of the battery, such as the capability of withstanding external shock stresses without jeopardizing the function of the battery or deteriorating its electrical properties. This is particularly important for batteries intended for use on board submarines.

This object is realized substantially in that the two connection straps in each cell are disposed substantially mutually in parallel and are located in a plane which mainly goes through the centre axes of the connection straps and through the centres of gravity of the electrode plates, and in that the upper connection strap in each cell is connected to the cover by means of one or several pole posts which are substantially located in the plane through the centre axes of the connection straps, and that the lower common connection strap is supported by at least two shock-absorbing elements arranged on either side of the partition wall.

In a suitable embodiment of the invention the pole posts are fixed to the cover by means of a mechanical connection which prevents axial displacement in the bores through the cover.

According to the invention it is consequently possible to utilise a cover as a shock-absorbing element for that group of electrode plates which is connected to the upper connection strap, whereas the shock-absorbing element disposed at the bottom of the cell vessel serves as a shock-absorbing element for that group of electrode plates which is connected to the lower connection strap. The cover is preferably made of glass fibre reinforced plastics and the shock-absorbing element at the bottom of the vessel is made of rubber. The invention also provides a structure in which the groups of electrode plates will be given a maximum flexible extension for a given external dimension of the accumulator cell without reducing the volume for active material. Since the electrode plates in this structure are symmetrically supported at the bottom of the cell and in a similar way are symmetrically suspended by the upper connection the moment arms will be minimized for the forces affecting the electrode plates when the battery is subject to shocks. This is due to that the lower supporting point as well as the upper suspension point are located in a vertical plane which passes through these points and also through the centres of gravity of the electrode plates. The structure enables the bottom of the cell vessel to be exposed to considerable shock forces without risk of damaging the cells. There is thus no need to arrange specific shock absorbers in the battery bed and the space thus saved can be utilized for the installation of more battery capacity within a given space.

The long elastic extension for the electrode plate groups will make possible maximum utilization of the electrolyte for absorbing the shock energy when the plate groups move in the liquid relative to the cell vessel.

All these characteristics will result in the highest possible interior damping of the accumulator which means, that when the battery is subjected to a shock on the battery bed it will have considerably less tendency to rebound compared to a conventional structure.

Thus, there is no need to supply the battery with special means at its bottom to keep it attached to its bed. This will of course facilitate installation of the battery, which is of considerable importance when it is used on board a submarine. The insignificant rebound after subjection to shocks will also permit bigger battery volume within a given space which contributes to the arrangement of more battery capacity compared with conventional battery design.

An embodiment of a lead acid accumulator in accordance with the invention will now be described by way of example, reference being made to the accompanying drawings, on which

Fig. 1 is a perspective view of a lead acid accumulator according to the invention,

Fig. 2 is a sectioned side view of the accumulator according to Fig. 1,

Fig. 3 is a sectioned view through one of the cells in Fig. 2,

Fig. 4 is a view from above of the accumulator according to Fig. 2,

Fig. 5 is a detail of a bushing in the partition wall between the cells, and

Fig. 6 is a partially sectioned perspective view of a cell vessel for an inventive accumulator with raised cover.

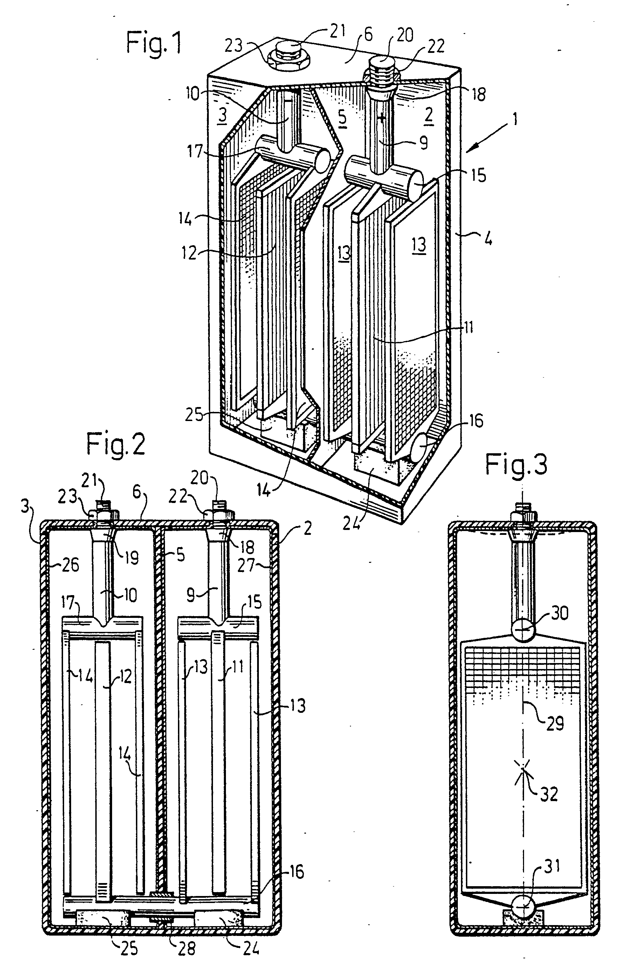

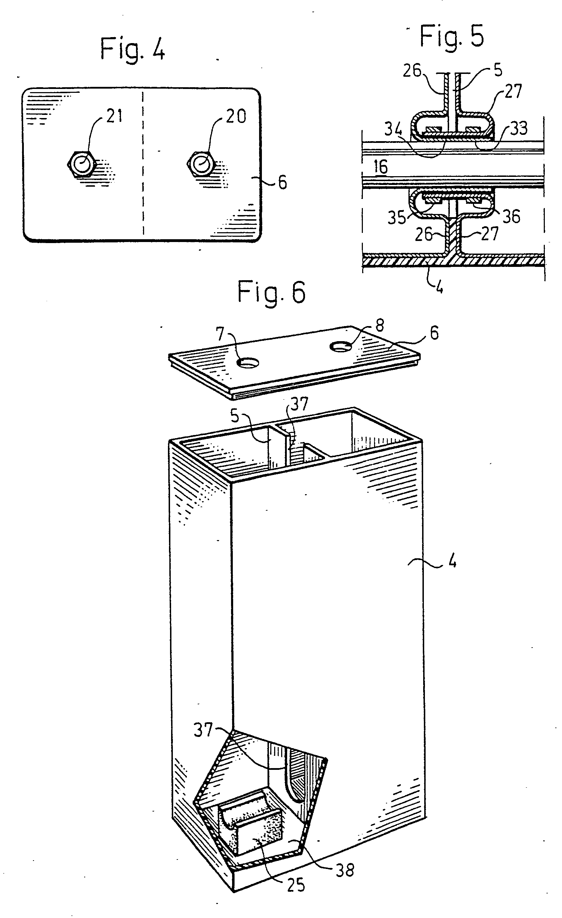

As appears from Fig. 1 the lead acid accumulator 1 of the invention comprises two pairs of electrolyte cells 2 and 3 which are enclosed in a cell vessel 4 with a partition wall 5 between the separate cells and with a cover 6 which is provided with springs 7 and 8 (see Fig. 6) for the pole posts 9 and 10 passing through the cover 6 and rigidly connected thereto. Each cell comprises at least one positive 11 or 12 and one negative 13 or 14 group of electrodes which are connected to the respective connection straps. In the cell to the right in the Figure the positive electrode 11 is connected to the upper connection strap 15, whereas the two negative electrodes 13 are connected to the lower strap 16. In the cell 3 to the left in the Figure, the conditions are the opposite, the two negative electrodes 14 being connected to the upper conection strap 17, and the positive electrode 12 being connected to the connection strap 16 which is common to the two cells. The two pole posts 9 and 10 extending through the cover will thus form the output terminals for a positive cell 2 and a negative cell 3, respectively. The pole posts are moreover provided with tapered collars 18 and 19, (see Fig. 2) which bear against the interior surface of the cover 6, while the threaded portions 20 and 21, of the posts extend outwardly from the springs 7 and 8 in the cover 6, to which the posts are connected by means of threaded nuts 22 and 23. The lower connection strap 16 is supported on rubber members 24 and 25 which support the electrode groups 12 and 13, in each of the cells, while the posts 9 and 10, which are rigidly connected to the cover 6, will suspend the other electrode groups 14 and 11, via the upper connection strap 15 and 17.

The arrangement with the different components included in the battery structure according to the invention are more clearly shown on Figs. 2—5. Each cell is thus enclosed in a liquid-tight cover 26 and 27, and the lower connection strap 16, which is common to the two cells, is passed through the partition wall 15 and through the two liquid-tight casings 26 and 27 by means of a bushing 28 which is shown in detail on Fig. 5. As appears from Figs. 2 and 3, the two connection straps 15, 16 and 17, 16, in the cells 2 and 3, respectively are disposed substantially mutually in parallel, and are located in a plane 29 essentially going through the centre axes 30, 31 of the connection straps and through the centres of gravity 32 of the electrode plates. This plane 29 forms a vertical plane through the gravitational line of action of the electrode plates, connection straps and the pole posts when the battery is supported on a horizontal surface. Thus, the electrode plates will be subject to a maximum moment around their suspension points when exposed to a shock load in the vertical plane this moment being as small as possible. The bottom and the cover of the cell vessel will consequently only be exposed to compressive forces and when subject to a shock load the cover 6 and the rubber members 24 and 25 will be deformed in the way indicated with dashed lines on Fig. 3.

By the central location of the pole posts 20 and 21 the resilient properties of the cover 6 can be utilized to a maximum, which means that a certain elastic deflection will result in the least possible stress on the cover 6 and on the cell vessel 4. The lower connection strap 16 is supported by the rubber members 24 and 25 which are symmetrically located on the bottom of their corresponding cell. By mutually adapting the dynamic spring constants of the cover 6 and of the rubber members 24 and 25, the relative movement between the two groups of electrodes 11, 13 and 12, 14, could be eliminated since the forces which affect the two groups can be made less than the frictional forces between the electrode plates. The cover and the rubber members will consequently cooperate to provide a low frequency suspension with long elastic extension for the electrode groups, and with the effect of the electrolyte these deflection lengths will give the accumulator high inner damping and consequently the ability to absorb shock energy. The bottom of the cell vessel could thus be subject to high shock loads without risk of damaging the active portions of the cell. The high inner damping will also have the advantage of giving the battery a low rebound amplitude. As a result thereof the accumulator does not need to be fixed to the bed, which is usual in the installation of conventional batteries. An accumulator according to the invention can consequently be put directly on the support surface without being fixed and the space above the battery can be adapted to the characteristic low rebound amplitude. Therefore, the battery bed will not have to be supplied with special shock-absorbing means. All these characteristics taken together mean that it will be possible to install a greater battery volume in a given space, if the battery is designed according to the invention, compared to the volume which could be installed if the battery is of conventional design.

The symmetrical suspension of the pole posts 20 and 21 in the cover 6 is shown on Fig. 4.

Fig. 5 shows in detail the bushing 28 through the partition wall 5 and the two liquid-tight casings 26 and 27 which are provided with tubular, mutually opposing openings 33 and 34 in overlapping relation around the lower connection strap 16. Two hose clips 35 and 36 are arranged around the outer tubular opening 34 in order to effectively prevent leakage of electrolyte into the cell vessel between the two liquid-tight casings. The bushing 28 in the partition wall 5 is thus flexible, i.e. it lacks a rigid connection with the cell vessel, making it possible for the lower connection strap to move relative the vessel without causing any damage. This is of course of greatest importance when the accumulator is subject to shock loads.

Fig. 6 shows the cell vessel 4 and the cover 6 with the two bores 7 and 8 for the pole posts 20 and 21. The Figure clearly illustrates the central and symmetrical location of one rubber member 25 in the negative cell 3. It also illustrates that the partition wall 5 is provided with a groove 37 from the top of the vessel and down to the bottom 38 thereof, to permit the two interconnected cells 2 and 3 to be lowered into the vessel until they rest against the rubber members 24 and 25. The cell vessel is suitably made of glass fiber-reinforced plastics, and the two liquid-tight casings are suitably made of rubber.

**Claims**

1. Lead acid accumulator with bottom connection, comprising at least one pair of accumulator cells, each cell being enclosed in a cell vessel which is common to said pair of cells and has a liquid-tight partition wall between the separate cells and a cover with an opening for the pole posts, each of said cells including two groups of electrode plates, one positive and one negative, each of which is connected to a corresponding connection strap, one strap being situated above and the other below the electrode plates, the bottom connection strap being common to said pair of cells and passing from one cell to the other through the partition wall, characterized in that the two connection straps in each cell are disposed substantially mutually parallel and the central axes thereof are located in a vertical plane which goes through the centres of gravity of the electrode plates, in that the upper connection strap in each cell is connected to the cover by means of one or several pole posts which are located in said plane and in that the lower common connection strap is supported by at least two shock-absorbing members being arranged on either side of the partition wall.

2. Lead acid accumulator according to claim 1, characterized in that the pole posts are rigidly attached to the cover by means of a mechanical connection with fastening means on both sides of the cover which prevent appreciable axial movement of the posts relative to the openings in the cover.

3. Lead acid accumulator according to claim 1, characterized in that the lower common connection strap is passed through the liquid-tight partition wall by means of a flexible bushing which lacks rigid connection to the vessel and provides a liquid-tight seal between the cells.

**Patentansprüche**

1. Bleisäureakkumulator mit Bodenverbinder, umfassend wenigstens ein Paar von Akkumulatorzellen, wobei jede Zelle in einem Zellengefäß aufgenommen ist, das für das Paar von Zellen gemeinsam ist, und das eine flüssigkeitsdichte Trennwand zwischen den getrennten Zellen und einen Deckel mit einer Öffnung für die Polzapfen aufweist, wobei jede der Zellen zwei Gruppen von Elektrodenplatten, eine positive und eine negative, aufweist, von denen jede mit einem entsprechenden Verbinderstreifen verbunden ist, wobei ein Streifen über und der andere unter den Elektrodenplatten angeordnet ist, wobei der Bodenverbinderstreifen für das Paar von Zellen gemeinsam ist und von einer Zelle durch die Trennwand zur anderen Zelle führt, dadurch gekennzeichnet, daß die zwei Verbinderstreifen in jeder Zelle im wesentlichen zueinander parallel angeordnet sind, wobei die Mittelachsen derselben in einer Vertikalebene angeordnet sind, die durch die Schwerpunkte der Elektrodenplatten geht, daß der obere Verbinderstreifen in jeder Zelle über einen oder mehrere Polzapfen, die in dieser Ebene angeordnet sind, mit dem Deckel verbunden ist, und daß der untere gemeinsame Verbinderstreifen durch wenigstens zwei stoßdämpfende Teile abgestützt ist, die auf beiden Seiten der Trennwand angeordnet sind.

2. Bleisäureakkumulator nach Anspruch 1, dadurch gekennzeichnet, daß die Polzapfen mit dem Deckel über eine mechanische Verbindung mit Befestigungsmitteln auf beiden Seiten des Deckels starr verbunden sind, die eine nennenswerte Axialbewegung der Zapfen gegenüber den Öffnungen im Deckel verhindern.

3. Bleisäureakkumulator nach Anspruch 1, dadurch gekennzeichnet, daß der untere, gemeinsame Verbinderstreifen über eine flexible Hülse, die keine starre Verbindung mit dem Gefäß ist, und die eine flüssigkeitsdichte Abdichtung zwischen den Zellen gewährleistet, durch die flüssigkeitsdichte Trennwand geführt ist.

**Revendications**

1. Accumulateur au plomb avec connexion par le fond, comprenant au moins une paire d'éléments, chaque élément étant logé dans un récipient à élément, lequel est commun à ladite paire d'éléments et comporte une paroi de séparation étanche au liquide entre les éléments séparés et un couvercle avec une ouverture pour les bornes, chacun desdits éléments comportant deux groupes de plaques-électrodes, un positif et un négatif, dont chacun est connecté à une barrette correspondante de connexion, une barrette étant située au-dessus et l'autre en-dessous des plaques-électrodes, la barrette de connexion du fond étant commune à ladite paire d'éléments et passant d'un élément à l'autre à travers la paroi de séparation, caractérisé par le fait que les deux barrettes de connexion dans chaque élément sont disposées essentiellement de façon parallèle l'une à l'autre, et leurs axes verticaux sont situés dans un plan vertical qui passe par les centres de gravité des plaques-électrodes, par le fait que la barrette supérieure de connexion dans chaque élément est connectée au couvercle au moyen d'une ou plusieurs bornes qui sont situées dans ledit plan, et par le fait que la barrette de connexion commune inférieure est supportée par au moins deux pièces absorbant les chocs et disposées de chaque côté de la paroi de séparation.

2. Accumulateur au plomb selon la revendication 1, caractérisé par le fait que les bornes sont attachées rigidement au couvercle au moyen d'une connexion mécanique, avec des moyens de fixation de chaque côté du couvercle, qui évitent un mouvement axial assez important des bornes par rapport aux ouvertures dans le couvercle.

3. Accumulateur au plomb selon la revendication 1, caractérisé par le fait que la barrette de connexion commune inférieure passe à travers la paroi de séparation étanche au liquide au moyen d'un manchon flexible qui remplace une connexion rigide avec le récipient et assure un joint étanche au liquide entre les éléments.

Fig.1

Fig.2

Fig.3

Fig. 4

Fig. 5

Fig. 6